(19) Europäisches Patentamt European Patent Office Office européen des brevets

(11) **EP 0 998 086 B1**

(12) **EUROPEAN PATENT SPECIFICATION**

(45) Date of publication and mention
of the grant of the patent:
**15.04.2009 Bulletin 2009/16**

(51) Int Cl.:
*H04L 27/26* (2006.01)

(21) Application number: **99121504.7**

(22) Date of filing: **28.10.1999**

(54) **Carrier and symbol synchronisation for multicarrier signals**

Synchronisierung von Träger und Symbolen für Mehrträgersignale

Synchronisation de porteuse et de symboles pour signaux multiporteurs

(84) Designated Contracting States:
**AT BE CH CY DE DK ES FI FR GB GR IE IT LI LU MC NL PT SE**

(30) Priority: **30.10.1998 IT TO980917**

(43) Date of publication of application:
**03.05.2000 Bulletin 2000/18**

(73) Proprietor: **SOCIETA ITALIANA PER LO SVILUPPO DELL'ELETTRONICA S.I.SV.EL S.P.A.**
**10060 None (Torino) (IT)**

(72) Inventors:
• **Cariolaro, Gianfranco**
**35037 Teolo (IT)**
• **De Prezzo, Ugo**
**31100 Treviso (IT)**
• **Laurenti, Nicola**
**35030 Cervarese Santa Croce (IT)**
• **Renzulli, Fabrizio**
**30026 Portogruaro (IT)**

(74) Representative: **Eisenführ, Speiser & Partner**
**Martinistrasse 24**
**28195 Bremen (DE)**

(56) References cited:
**US-A- 5 345 440**

• **SCHMIDL T M ET AL: "LOW-OVERHEAD, LOW-COMPLEXITY UBURST SYNCHRONIZATION FOR OFDM" 1996 IEEE INTERNATIONAL CONFERENCE ON COMMUNICATIONS (ICC). CONVERGING TECHNOLOGIES FOR TOMORROW'S APPLICATIONS. DALLAS, JUNE 23 - 27, 1996, IEEE INTERNATIONAL CONFERENCE ON COMMUNICATIONS (ICC), NEW YORK, IEEE, US, vol. 3, 23 June 1996 (1996-06-23), pages 1301-1306, XP000625022 ISBN: 0-7803-3251-2**
• **BEEK VAN DE J-J ET AL: "ML ESTIMATION OF TIMING AND FREQUENCY OFFSET IN MULTICARRIER SYSTEMS" FORSKNINGSRAPPORT - TEKNISKA HOGSKOLAN LULEA, EKNISKA HOGSKOLAN I LULEA, LULEA, ST, April 1996 (1996-04), page COMPLETE XP000826867 ISSN: 0347-0881**

EP 0 998 086 B1

**Description**

The present invention refers to a method and a corresponding apparatus for the time and frequency synchronization in transmission and reception systems with multi-carrier modulation of the OFDM (Orthogonal Frequency Division Multiplexing) type. DVB-T (Digital Video Broadcasting - Terrestrial) and DAB (Digital Audio Broadcasting) are based on this modulation type.

DVB-T is the European system for the terrestrial transmission of a digital television signal according to the specification "ETS 300 744, Framing structure channel coding and modulation for digital Terrestrial Television, March 1997". Said system provides two transmission modes called 2k and 8k, depending on the fact that the OFDM modulation has respectively 1705 or 6817 carriers, also called cells, modulated QPSK (Quadrature Phase Shift Keying), or 16 QAM (Quadrature Amplitude Modulation) or 64 QAM. The set of the values transmitted in one defined instant on the 1705 or 6817 carriers or cells is called OFDM symbol.

The DAB system for the transmission of the digital audio signal is based on the specification "ETS 300 401, Radio Broadcasting Systems; Digital Audio Broadcasting to mobile, portable and fixed receivers, January 1994", and provides three transmission modes which differ for the number of carriers used in the OFDM modulation. There are 1536 carriers in the mode 1, 384 in the mode 2 and 192 in the mode 3, therefore a symbol is made out of 1536, 384 or 192 carriers or cells. The carriers are modulated by using the system known as $\pi/4$ - shifted DQPSK (Differential Quadrature Phase Shift Keying), as shown in the publication "Digital Communications" by J.D. Proakis, Mc Graw-Hill International Editions.

In the said OFDM systems, as time synchronization we understand the alignment of the sampling frequency of the transmitter with that of the receiver, while the frequency synchronization provides for the correction of the frequency deviation introduced in reception in the base band translation of the signal transmitted in the pass-band. For the identification and the consequent removal of great part of the frequency deviation the known and proved solution which is used is the so-called "correlation solution", as described e.g. in the article "A Digital Audio Broadcasting (DAB) Receiver" by K. Taura, M. Tsujishita et al, IEEE Transactions on Consumer Electronics, vol. 42, no. 3, August 1996, pp. 322-327. By means of this technique particular, known to the receiver, pseudo-random sequences are transmitted, and they are characterized by having a quasi-impulsive auto-correlation. In this way, by performing a correlation between the received symbol and the known sequence it is possible in reception to estimate the frequency deviation, analyzing the shifting which is necessary for obtaining the maximum value of correlation. In fact such a maximum will be obtained in correspondence of the nearest integer to the normalized frequency deviation, which is the ratio between the frequency deviation and the sub-channel spacing, i.e. the spacing between two adjacent carriers. With this method it is therefore possible to avoid a frequency deviation equal to one or more multiples of the sub-channel spacing.

The synchronization techniques have been the subject of several studies, particularly in the article "A technique for Orthogonal Frequency Division Multiplexing frequency offset correction", by P.H. Moose, IEEE Transactions on Communications, vol. 42, no. 10, October 1994, pp. 2908-2914, where an estimation technique has been proposed with the maximal probability of the frequency deviation. In the article "A frequency and timing acquisition technique for OFDM systems", by H. Nogami and T. Nagashima, Proceedings PMRC '95, vol. 3, pp. 1010-1015, a technique has been proposed for the simultaneous synchronization of the frequency deviation and the sampling frequency with a not efficient average value estimation of the errors. The said techniques have the disadvantage of completely neglecting the difference between the actual sampling frequencies in transmission and reception, or of estimating it in a not precise and not efficient manner.

Aim of the present invention is that of indicating an improved method, and an apparatus using said method, for obtaining a correction of both the residual frequency deviation $\Delta f$ and the difference $1/\Delta To$ between the sampling frequencies; in particular said method uses only a single algorithm for the contemporary estimation of the errors, so that the control of the synchronization in reception is simplified.

For realizing such aim the present invention has as subject a method, and a corresponding apparatus, having the characteristics described in the attached claims, which are an integral part of the present description.

Further aims, characteristics and advantages of the present invention will be clear from the following detailed description and the attached drawings, supplied only as explanatory and non limiting examples, wherein:

- fig. 1 shows the structure of the transmitted DVB-T signal;
- fig. 2 shows the principle of the calculation on which the invention is based;
- fig. 3 shows the recursive pattern for the synchronization of a DVB-T signal with pilot cells of the continual type according to the invention;
- fig. 4 shows the time correction pattern for the pilot cells of the continual type;
- fig. 5 shows the time correction pattern for the pilot cells of the scattered type;
- fig. 6 shows the recursive pattern for the synchronization of a DAB signal according to the invention.

For making the reading easier the symbols and terms used in the following are listed below.

FFT: Fast Fourier Transform
IFFT: Inverse Fast Fourier Transform
PRS: Phase Reference Symbol
N: number of carriers
p: current carrier index
$p_i$: pilot carrier index
DQPSK: Differential Quadrature Phase Shift Keying -
v: duration of the guard interval
CPC: continual pilot cells
SPC: scattered pilot cells
$P_{CPC}$: set of the CPC carrier indexes
$P_{SPC}$: set of the SPC carrier indexes
$\in$ : symbol of belonging to a set
$F_o$: channel speed
$F = F_o/N$: sub-channel spacing
$T_o = 1/F_o$: temporal quantum of the channel
$T = (N+v)T_o$: symbol duration in transmission
$\Delta f$ frequency deviation
$T'_o$: temporal quantum in reception
$\Delta T_o = T_o - T'_o$: sampling interval deviation
$1/\Delta T_o$: deviation from the sampling frequency
$T' = (N+v)T'_o$: symbol duration in reception
$\Delta f/F$: normalized frequency deviation
$\Delta T_o/T_o$ : normalized sampling frequency deviation
$X_p(nT)$: $p^{th}$ carrier, i.e. $p^{th}$ input of the IFFT modulation block at instant nT
$X'_p(nT')$: $p^{th}$ output of the IFFT demodulation block at instant nT'

In the DVB-T system an OFDM symbol is constituted, as said, by a set of 1705 carriers (2k mode) or 6817 carriers (8k mode) which are contemporarily transmitted; the transmission is organized in frames composed by 68 symbols. Four consecutive frames build a "superframe". Each frame contains, besides cells or data carriers, also special cells, called pilot cells, which are used in reception for the synchronization of the OFDM signal, and are transmitted at a power level amplified by a factor 16/9 in respect of the normal cells carrying the data of the television signal. The pilot cells are of two types: "scattered", in the following called SPC cells, and "continual", in the following CPC cells, and transmit known data pertaining to a pseudo-random binary sequence (shortly PRBS).

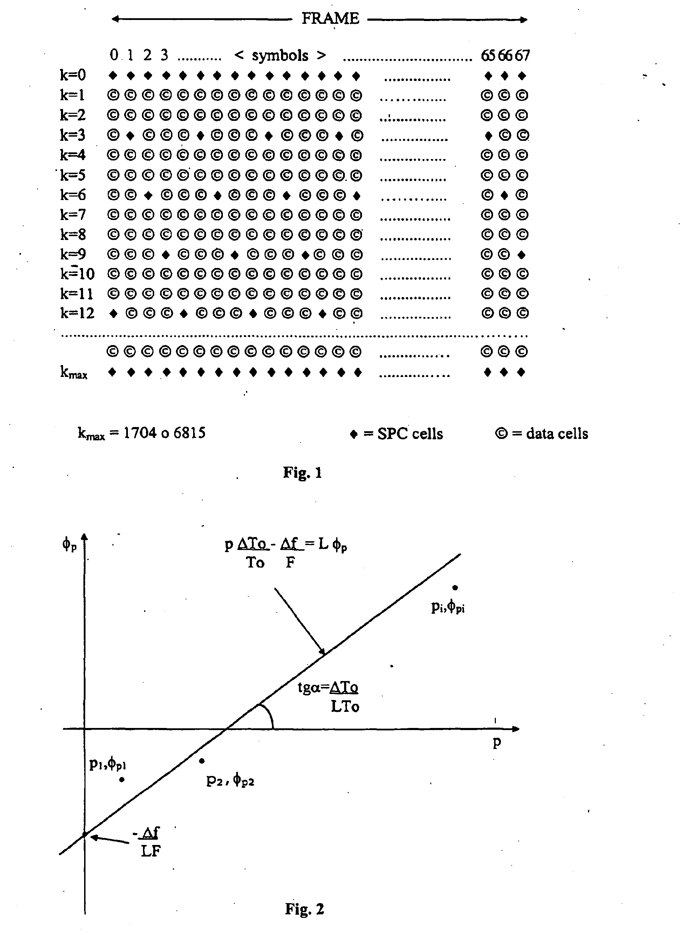

Fig. 1 shows the position of the SPC cells in a frame; in the figure the vertical columns represent the succession of the symbols in a frame, while k indicates the position of a cell in a symbol, with $0 \leq k \leq k_{max}$, where $k_{max}$ is equal to 1704 or 6816. We can notice that the SPC cells appear in the same position every 4 symbols; the CPC cells, not shown in the figure, instead are repeated every symbol in the precise positions defined by the standard (positions 0, 48, 54, 87, 141, etc.). In other words the pilot cells have a repetition period equal to a multiple m of the period of the symbol: for the CPC cells m = 1, while for the SPC cells m = 4.

Taking in account the frequency deviation, the temporal deviation and the various distortions introduced, the relationship between the $p^{th}$ received carrier X'p and the same transmitted carrier Xp is:

$$X'p(nT') = Xp(nT)\, H(pF)\, A_p\, e^{j(2\pi/N)(N+v)[n(p\,\Delta To/To - \Delta f/F) + \varphi p]} \qquad 1)$$

where $\varphi_p$, $A_p\ eH(pF)$ represent respectively a phase shift, an actual attenuation and the frequency response in base band of the channel at the frequency pF, while $\Delta T_o$ is the variation of the sampling interval and $\Delta f$ is the residual frequency variation. Evaluating the 1) in two consecutive periods (n+1)T' and nT' for the CPC cells which, as said, occupy the same position in all symbols, we obtain the relationship:

$$X'p_i((n+1)T') \, X'p_i{}^*(nT') = Xp_i((n+1)T) \, Xp_i{}^*(nT) \, |H(pF)|^2 \, A_p{}^2 \, e^{j(2\pi/N)\,(N+v)\,[p_i\,\Delta To/To \,-\, \Delta f/F]}$$

$$\text{with } p_i \in P_{CPC} \qquad\qquad\qquad\qquad 2)$$

where the scientific notation * means conjugate complex.

The same relationship is valid for the SCP, but evaluating the 1) in the periods (n+4)T' and nT', as the SPC have a period of 4 symbols:

$$X'p_i\,((n+4)T') \, X'p_i{}^*(nT') = Xp_i\,((n+4)T) \, Xp_i{}^*(nT) \, |H(pF)|^2 A_p{}^2 \, e^{j(8\pi/N)\,(N+v)\,[\,p_i\,\Delta To/To \,-\, \Delta f/F\,]}$$

$$\text{with } p_i \in P_{SPC} \qquad\qquad\qquad\qquad 3)$$

Relationships 2) and 3), where the symbols $Xp_i$ are known and constant in time, constitute the basis of the invention; they can also be written:

$$p_i\,(\Delta T_o/\,T_o) - \Delta f/F = N/(2\pi(N+v)) \, \arg(X'p_i(n+1)T') \, X'p_i{}^*(nT')) \,, \; p_i \in P_{CPC} \qquad 4)$$

$$p_i\,(\Delta T_o/\,T_o) - \Delta f/F = N/(8\pi(N+v)) \, \arg(X'p_i(n+4)T') \, X'p_i{}^*(nT')) \,, \; p_i \in P_{SPC} \qquad 5)$$

and, by defining

$$\phi_{pi} = \arg(X'p_i((n+1)T') \, X'p_i{}^*(nT')) \text{ and } L = N/(2\pi(N+v)) \text{ for the CPC cells}$$

$$\phi_{pi} = \arg(X'p_i((n+4)T') \, X'p_i{}^*(nT')) \text{ and } L = N/(8\pi(N+v)) \text{ for the SPC cells}$$

we get

$$p_i\,(\Delta T_o/\,T_o) - \Delta f/F = L\phi_{pi} \,, p_i \in P_{CPC} \text{ or } p_i \in P_{SPC} \qquad\qquad 4')$$

In the 4') $p_1$ is the pilot carrier index and $\phi_{pi}$ the differential phase, i.e. the difference of phase of a pilot carrier in two adjacent symbols ($P_{CPC}$ carrier) or in symbols spaced of 4 consecutive periods ($P_{SPC}$ carrier).

For each carrier of the $P_{CPC}$ or $P_{SPC}$ set we can calculate couples of values $(p_o, \phi_{po})$, $(p_1, \phi_{p1})$, $(p_2, \phi_{p2})$, ... , $(p_i, \phi_{pi})$, ... which, in the Cartesian plane $(p, \phi_p)$ represent points where the straight line defined by the 4') passes. It is to be noticed that $\Delta T_o$ and $\Delta f$ vary from carrier to carrier.

The principle on which the invention is based provides the estimation of $\Delta f$, i.e. the residual deviation, and $1/\Delta T_o$, i.e. the sampling frequency deviation, by means of the straight line that approximates at best all the Cartesian points having coordinates $(p_i, \phi_{pi})$, with $p_1 \in P_{CPC}$ or $p_i \in P_{SPC}$ . Such straight line represents the desired estimations, as $\Delta f$ is given, apart from the factor $1/LF$, by the intersection of that line and the axis of ordinates, while the angular coefficient tga of the line yields the estimation of $\Delta T_o$, apart from the factor $1/LT_o$, as shown in fig. 2.

In mathematical terms, that line is determined by means of the known minimum squares approximation, according to which the desired for estimation is that which minimize the sum of the squares of the single errors; the desired estimations $\Delta \hat{T}_0$ and $\Delta \hat{f}$ are therefore those which minimize the quantity:

$$S = \sum_{i=0}^{N_P-1} \left[ \phi_{P_i} - \frac{1}{L} \left( \frac{\Delta \hat{T}_0}{T_0} p_i - \frac{\Delta \hat{f}}{F} \right) \right]^2 \qquad \qquad 6)$$

where Np is the number of the continual or scattered pilot carriers.

The originality of the proposed solution is in the possibility of estimating contemporarily and in a reliable manner $\Delta T_o$ and $\Delta f$ so notably simplifying the operation of synchronizing while receiving.

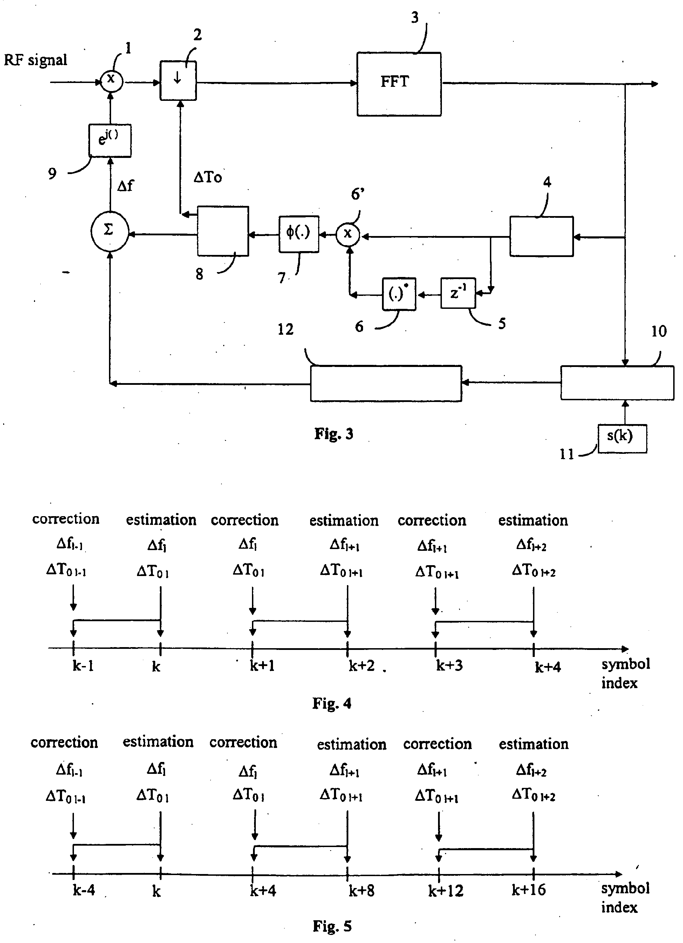

Practically the synchronization with CPC carriers is made according to the recursive pattern of fig. 3, wherein the block number 1 converts in base band the radio frequency signal RF, the block 2 represents the sampling, the block 3 represents the FFT operation for reconstructing in reception the symbols, in the block 4 the CPC carriers are extracted, the block 5 inserts a delay equal to a period of a symbol, the block 6 performs the conjugate complex operation, the block 6' multiplies the signals coming from blocks 4 and 6, the block 7 calculates the $\phi_{pi}$ phases, in the block 8 the estimation is performed for the line which approximates at best the points (p, $\phi_p$), i.e. the values of $\Delta T_o$ and $\Delta f$ are calculated which minimize the 6); the block 9 generates the frequency for the translation in base band performed by block 1. In the bottom part of fig. 3 the removal of most of the frequency deviation is performed by means of the already cited correlation method; the block 10 performs in fact the correlation between the received symbol and the sequence s(k) generated in block 11 and which is defined by

$$s(k) = \begin{cases} \text{PRBS(k) if } k \in P_{CPC} \\ 0 \text{ for other carriers} \end{cases}$$

The block 12, starting from the values delivered by the correlation, generates a first estimation of the frequency deviation, which is then perfected by means of the above described technique shown in the upper part of fig. 3.

It is important to notice that the described estimation technique generates the estimation starting from two consecutive symbols CPC, and it is therefore possible to estimate the deviations only every second symbol, as shown in the timing pattern of fig. 4.

For the solution with SPC cells the patterns are all equal to those of fig. 3 and 4 with the only changing of the time reference; actually in this case the delay produced by block 5 is of 4 symbols, while the estimation is obtained every 8 symbol periods, as shown in fig. 5. The two synchronization techniques with CPC and SPC have different performances. By means of an analytic study and an accurate simulation, we demonstrated that the SPC solution gives a more precise estimation than the CPC solution, so that two synchronization levels are available, one fine with CPC and a second very fine with SPC. The difference is due to the different characteristics of the sets of $P_{CPC}$ and $P_{SPC}$ carriers. The $P_{CPC}$ set is in fact composed by 45 carriers in the 2k mode and 177 carriers in the 8k mode, while the $P_{SPC}$ set has 142 carriers in the 2k mode and 568 carriers in the 8k mode. The greater number of carriers in the $P_{SPC}$ solution allows a much better estimation of the minimum squares.

In the DAB system the transmission is organized in frames; each frame is constituted by the sequence of the null symbol, the PRS symbol (Phase Reference Symbol) and the symbols which contain the useful information, whose number varies according to the mode: 76 for modes 1 and 2, 153 for mode 3.

While for the synchronization of frame and the rough synchronization of frequency the said two symbols of every frame are used, by exploiting the auto-correlation property of PRS with a technique similar to that described for the DVB-T system, for the synchronization of the sampling frequency and the fine correlation of the frequency the useful data are adequately processed.

The analysis of the DAB system, in presence of frequency deviation and temporal deviation, yields the same results seen for the DVB-T system, as the two systems are analogous, so that the relation 1) between the received symbol and the transmitted symbol is still valid.

As, however, in the case of the DAB the pilot cells are missing, all the carriers of a symbol are used, carrying generally different and variable signals, because they represent, as said, the useful data. Relations 2), 4) and 4') are still valid, but they should be intended as extended to all carriers and not to the pilot carriers only.

As the standard provides the differential modulation $\pi/4$ - shift DQPSK, where the carriers phases are located at $\pi/4$, $3/4\pi$, $5/4\pi$ and $7/4\pi$, the contribution given in 2) by the data represents a phase equal to an odd multiple of $\pi/4$, which adds up to the phase associated to the errors. In order to solve the problem of the fine synchronization, the amount of errors and their phase are very small in comparison with a multiple of $\pi/4$, and therefore the latter can be easily isolated in the calculation. The invention relating to the DVB-T system when applied to the DAB system provides for the estimation of $\Delta f$ and $\Delta T_o$ still using the straight line which at best approximates the points of coordinates (p, $\phi_p$), starting from the

expression 4'), but where p takes all values comprised between 0 and N-1.

The 6) becomes therefore

$$S = \sum_{p=0}^{N-1} \left[ \phi_p - \frac{1}{L}\left( \frac{\Delta \hat{T}_0}{T_0} p - \frac{\Delta \hat{f}}{F}\right)\right]^2 \qquad\qquad 7)$$

where N is the total number of the carriers and L = N/(2π(n+v)).

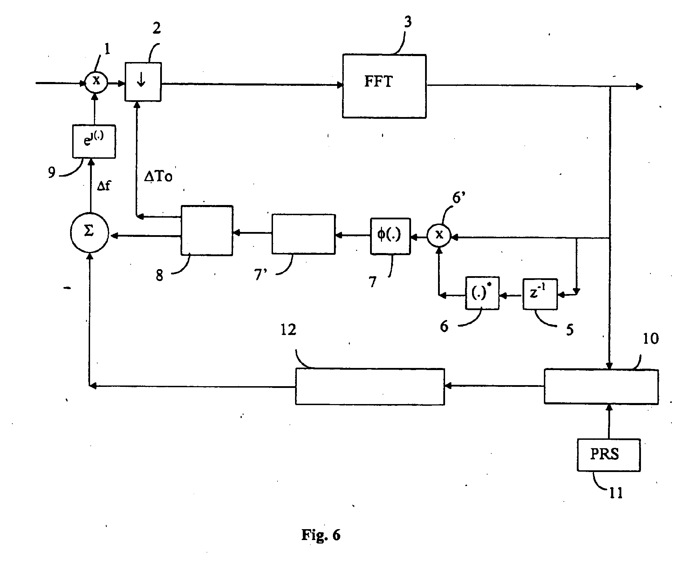

Fig. 6 shows the recursive pattern for the DAB; block 7' eliminates the odd multiples of π/4 due, as said, to the modulation; block 11 represents the PRS generator. The other blocks have the same function of that of fig. 3, hence their description is not repeated here.

The advantages of the proposed method and the corresponding apparatus are now evident: firstly the estimation of Δf and 1/ΔT$_o$ is made by means of the minimum squares approximation using only one single recursive algorithm with successive approximations, and therefore in a very quick manner simplifying by far the control of the synchronization on the reception side; furthermore such estimation is made more reliable and efficient because it is based on the examination of samples received in two different symbols, i.e. on a greater number of pieces of information in comparison with the solutions that provide the estimation by examining samples of only one symbol.

It is clear that several variations can be made to the method and the apparatus according to the present invention without exiting from the scope of the novelty principles which are inherent to the inventive idea.

**Claims**

1.   Method for estimating an error (1/ΔT$_o$) between sampling frequencies of a transmitter and a receiver and for estimating a residual frequency deviation (Δf) produced in the receiver, in a digital multi-carrier system of the OFDM type, having one or more pilot carriers with a repetition period equal to a multiple m of the period of the symbol, m being an integer number, **characterized by** the following steps :

- calculating the value of differential phases for each pilot carrier with index p$_i$ by $\phi_{pi}$ = arg (X'$_{pi}$ ((n+m)T') X'$_{pi}$*(nT')), where X'$_{pi}$ (n+m)T' and X'$_{pi}$(nT') are the symbols on the reception side of the pilot carrier with index p$_i$ in the periods of symbol (n+m)T' and nT', and X'$_{pi}$ *(nT') is the conjugate complex of X'$_{pi}$, (nT'),
- determining values that minimize the quantity

$$S = \sum_{i=0}^{N_p-1} \left[ \phi_{p_i} - \frac{1}{L}\left( \frac{\Delta \hat{T}_0}{T_0} p_i - \frac{\Delta \hat{f}}{F}\right)\right]^2$$

where N$_P$ is the number of pilot carriers, L = N$_P$/ (2πm(N$_P$ +v)), p$_i$ is the pilot carrier index, T$_0$ is the temporal quantum of the channel, F is sub-channel spacing and v is the duration of guard interval, wherein estimated values of the error (1/ΔT$_0$) between the sampling frequencies and the estimated values of the residual frequency deviation (Δf) correspond to the determined values minimizing the quantity **S**.

2.   Method according to claim 1, **characterized in that** the OFDM multi-carrier system is the television system known as DVB-T (Digital Video Broadcasting - Terrestrial).

3.   Method according to claim 1, **characterized in that** the pilot carriers have a repetition period equal to one symbol period, i.e. m = 1.

4.   Method according to claim 2, **characterized in that** the pilot carriers have a repetition period equal to 4 symbol periods, i.e. m = 4.

5.   Method according to claim 3, wherein the digital multi-carrier system of the OFDM type, comprising N carriers, each one with differential modulation π/4 - shifted Differential Quadrature Phase Shift Keying (DQPSK), **characterized by** the following steps:

- calculating a value of the differential phases by $\phi_p = \arg(X'p((n+1)T')\,X'p^*(nT'))$, where $X'p(nT')$ and $X'p((n+1)T')$ are the symbols on the reception side of the $p^{th}$ carrier in the periods of symbol $nT'$ and $(n+1)T'$ and $X'p^*(nT')$ is the conjugate complex of $X'p\,(nT')$, of all the carriers; and
- removing from each $\phi_p$ a quantity equal to an odd integer of n/4.

6. Apparatus for estimating an error $(1/\Delta T_0)$ between the sampling frequencies of a transmitter and a receiver and estimating a residual frequency deviation $(\Delta f)$ produced on the reception side, in a digital multi-carrier system of the OFDM type, having one or more pilot carriers with a repetition period equal to a multiple m of the period of the symbol, m being an integer number,

   **characterized by**

   means (5) for delaying said symbols $X'_{pi}(nT')$ of said pilot carriers of m symbol periods,
   means (6) for performing the conjugate complex operation on said delayed symbols $X'_{pi}(n+m)T'$,
   means (6') for multiplying the non delayed symbols and the conjugate complexes of the delayed symbols,
   means (7) for obtaining the differential phases $\phi_{pi} = \arg(X'p_i((n+m)T')\,X'p_i^*(nT'))$, and
   means (8) for determining values that minimize the quantity $S$

$$S = \sum_{i=0}^{N_p-1}\left[\phi_{p_i} - \frac{1}{L}\left(\frac{\Delta\hat{T}_0}{T_0}p_i - \frac{\Delta\hat{f}}{F}\right)\right]^2 .$$

   where $N_p$ is the number of the pilot carriers and $L = N_p/2\pi m(N_p + v)$, $p_i$ is the pilot carrier index, $T_0$ is the temporal quantum of the channel, F is the sub-channel spacing and $v$ is the duration of the guard interval,
   wherein estimated values of the error $(1/\Delta T_0)$ between the sampling frequencies and the estimated values of the residual frequency deviation $(\Delta f)$ correspond to the determined values minimizing the quantity $S$.

7. Apparatus according to claim 6, further comprising means (4) for extracting the symbols $X_{pi}(nT')$ of the pilot carriers $p_i$.

8. Apparatus according to claim 6 or 7, further comprising means (7') for removing from each $\phi_p$ a quantity equal to $n\pi/4$, where n is an odd integer so that $n\pi/4 < |\phi_p| < (n+2)\pi/4$, and means (8) for the contemporary estimation of the values $\Delta\hat{f}$ and $1/\Delta\hat{T}_0$ which minimize the quantity

$$S = \sum_{p=0}^{N-1}\left[\phi_p - \frac{1}{L}\left(\frac{\Delta\hat{T}_0}{T_0}p - \frac{\Delta\hat{f}}{F}\right)\right]^2$$

   where N is the number of the carriers and $L = N/2\pi(N + v)$.

9. Apparatus according to claim 6, wherein the OFDM system is a digital radio broadcasting system (DAB).

**Patentansprüche**

1. Verfahren zum Schätzen eines Fehlers $(1/\Delta T_0)$ zwischen Abtastfrequenzen eines Senders und eines Empfängers und zum Schätzen einer in dem Empfänger erzeugten Restfrequenzabweichung $(\Delta f)$ in einem digitalen Mehrträgersystem der OFDM-Type, mit einem oder mehreren Pilotträgern mit einer Wiederholungsperiode, die gleich einem Vielfachen m der Symbolperiode ist, wobei m eine ganze Zahl ist, **gekennzeichnet durch** die folgenden Schritte:

   - Berechnen des Wertes von verschiedenen Phasen für jeden Pilotträger mit einem Index $p_i$ **durch** $\phi_{pi} = \arg(X'_{pi}((n+m)T')\,X'_{pi}^*(nT'))$,
   hierbei sind $X'_{pi}(n+m)T'$ und $X'_{pi}(nT')$ die Symbole der Pilotträger auf der Empfangsseite mit dem Index $p_i$ in den Perioden des Symbols $(n+m)T'$ und $nT'$, und $X'_{pi}^*(nT')$ ist der konjugierte Komplex von $X'_{pi}(nT')$,

$$S = \sum_{i=0}^{N_p-1}\left[\phi_{p_i} - \frac{1}{L}\left(\frac{\Delta\hat{T}_0}{T_0}\,p_i - \frac{\Delta\hat{f}}{F}\right)\right]^2$$

- Ermitteln von Werten, die die folgende Größe $S$ minimieren:

hierbei ist $N_P$ die Anzahl von Pilotträgern, $L = N_P/(2\pi m(N_P +v))$, $p_i$ ist der Pilotträgerindex, $T_0$ ist das zeitliche Quantum des Kanals, F ist der Subkanalabstand und $v$ ist die Dauer des Guard Intervalls, wobei geschätzte Werte des Fehlers ($1/\Delta T_0$) zwischen den Abtastfrequenzen und den geschätzten Werten der Restfrequenzabweichung ($\Delta f$) den ermittelten Werten entsprechen, die die Größe $S$ minimieren.

2. Verfahren nach Anspruch 1, **dadurch gekennzeichnet, dass** das OFDM-Mehrträgersystem das Fernsehsystem ist, das als DVB-T (Digital Video Broadcasting -Terrestrial) bekannt ist.

3. Verfahren nach Anspruch 1, **dadurch gekennzeichnet, dass** die Pilotträger eine Wiederholperiode aufweisen, die gleich einer Symbolperiode ist, d.h. m = 1.

4. Verfahren nach Anspruch 2, **dadurch gekennzeichnet, dass** die Pilotträger eine Wiederholperiode aufweisen, die gleich 4 Symbolperioden ist, d.h. m = 4.

5. Verfahren nach Anspruch 3, bei dem das digitale Mehrträgersystem der OFDM-Type, das N Träger mit jeweils verschiedener Modulation in $\pi/4$-verschobener DQPSK (Differential Quadrature Phase Shift Keying) aufweist, durch folgende Schritte **gekennzeichnet** ist:

- Berechnen eines Wertes der verschiedenen Phasen durch $\phi_p = \arg(X'p((n+1)T')X'p^*(nT'))$, wobei $X'p(nT')$ und $X'p((n+1)T')$ die Symbole auf der Empfangsseite des p-ten Trägers in den Perioden der Symbole $nT'$ und $(n+1)T'$ sind und $X'p^*(nT')$ der konjugierte Komplex $X'p (nT')$ aller Träger ist; und
- Entfernen einer Größe, die gleich einem ungeraden Ganzen von $\pi/4$ ist, von jedem $\phi_p$.

6. Vorrichtung zum Schätzen eines Fehlers ($1/\Delta T_0$) zwischen den Abtastfrequenzen eines Senders und eines Empfängers und zum Schätzen einer auf der Empfängerseite erzeugten Restfrequenzabweichung ($\Delta f$) in einem digitalen Mehrträgersystem der OFDM-Type, mit einem oder mehreren Pilotträgern mit einer Wiederholungsperiode, die gleich einem Vielfachen m der Symbolperiode ist, wobei m eine ganze Zahl ist, **gekennzeichnet durch**

Mittel (5) zum Verzögern der Symbole $X'_{pi}(nT')$ der Pilotträger der m Symbolperioden,
Mittel (6) zur Durchführung der konjugierten Komplexberechnung an den verzögerten Symbolen $X'_{pi}(n+m)T'$,
Mittel (6') zum Multiplizieren der nicht verzögerten Symbole und der konjugierten Komplexe der verzögerten Symbole,
Mittel (7) zum Erhalten der verschiedenen Phasen $\phi_{pi} = \arg(X'p_i((n+m)T')\,X'p_i^*(nT'))$, und
Mittel (8) zum Ermitteln von Werten, die die folgende Größe $S$ minimieren:

$$S = \sum_{i=0}^{N_p-1}\left[\phi_{p_i} - \frac{1}{L}\left(\frac{\Delta\hat{T}_0}{T_0}\,p_i - \frac{\Delta\hat{f}}{F}\right)\right]^2$$

hierbei ist $N_P$ die Anzahl von Pilotträgern und $L = N_P/2\pi m(NP +v)$, $p_i$ ist der Pilotträgerindex, $T_o$ ist das zeitliche Quantum des Kanals, F ist der Subkanalabstand und $v$ ist die Dauer des Guard Intervalls, wobei geschätzte Werte des Fehlers ($1/\Delta T_0$) zwischen den Abtastfrequenzen und den geschätzten Werten der Restfrequenzabweichung ($\Delta f$) den ermittelten Werten entsprechen, die die Größe $S$ minimieren.

7. Vorrichtung nach Anspruch 6, weiter **gekennzeichnet durch** Mittel (4) zum Extrahieren der Symbole $X_{pi}(nT')$ der Pilotträger $p_i$.

8. Vorrichtung nach Anspruch 6 oder 7, weiter **gekennzeichnet durch** Mittel (7') zum Entfernen einer Größe, die gleich $n\pi/4$ ist, von jedem $\phi_p$, wobei n ein ungerades Ganzes ist, so dass $n\pi/4 < |\phi_p| < (n+2)\pi/4$, und Mittel (8) zur gleichzeitigen Schätzung der Werte $\Delta\hat{f}$ und $1/\Delta\hat{T}_0$, die die folgende Größe $S$ minimieren:

**EP 0 998 086 B1**

$$S = \sum_{p=0}^{N-1}\left[\phi_p - \frac{1}{L}\left(\frac{\Delta \hat{T}_0}{T_0}\,p - \frac{\Delta \hat{f}}{F}\right)\right]^2$$

hierbei ist N die Anzahl der Träger und L = N/2π(N + ν).

**9.** Vorrichtung nach Anspruch 6, **dadurch gekennzeichnet, dass** das OFDM-System ein DAB-System (digital radio broadcasting system) ist.

## Revendications

**1.** Procédé destiné à estimer une erreur (1/$\Delta T_0$) entre des fréquences d'échantillonnage d'un émetteur et d'un récepteur et destiné à estimer un écart de fréquence résiduelle ($\Delta f$) produit dans le récepteur, dans un système numérique à porteuse multiple du type OFDM, ayant une ou plusieurs porteuses pilotes avec une période de répétition égale à un multiple m de la période du symbole, m étant un nombre entier, **caractérisé par** les étapes suivantes consistant à :

- calculer la valeur de phases différentielles pour chaque porteuse pilote avec un indice $p_i$ par $\varphi p_i$ = arg (X'$p_i$( (n+m)T')X'$_{pi}$'(nT')),
où X'$_{pi}$(n+m)T' et X'$_{pi}$(nT') sont les symboles du côté réception de la porteuse pilote avec un indice $p_i$ dans les périodes de symbole (n+m)T' et nT', et X'$_{pi}$*(nT') est la complexe conjuguée de X'$_{pi}$(nT'),
- déterminer des valeurs qui minimisent la quantité *S*

$$S = \sum_{t=0}^{N_p-1}\left[\Phi_{pi} - \frac{1}{L}\left(\frac{\Delta \hat{T}_0}{T_0}\,p_i - \frac{\Delta \hat{f}}{F}\right)\right]^2$$

où Np est le nombre de porteuses pilotes, L = $N_p$/($2\pi m(N_p+\nu)$), $p_i$ est l'indice de porteuse pilote, $T_0$ est le quantum temporel du canal, F est un espacement entre voies secondaires et v est la durée d'un intervalle de garde,

dans lequel des valeurs estimées de l'erreur (1/$\Delta T_0$) entre les fréquences d'échantillonnage et les valeurs estimées de l'écart de fréquence résiduelle ($\Delta f$) correspondent aux valeurs déterminées minimisant la quantité *S*.

**2.** Procédé selon la revendication 1, **caractérisé en ce que** le système OFDM à porteuse multiple est le système de télévision connu en tant que DVB-T (Radiodiffusion Vidéo Numérique-Terrestre).

**3.** Procédé selon la revendication 1, **caractérisé en ce que** les porteuses pilotes ont une période de répétition égale à une période de symbole, c'est-à-dire, m=1.

**4.** Procédé selon la revendication 2, **caractérisé en ce que** les porteuses pilotes ont une période de répétition égale à 4 périodes de symbole, c'est-à-dire, m=4.

**5.** Procédé selon la revendication 3, dans lequel le système numérique à porteuse multiple du type OFDM, comprenant N porteuses, chacune ayant une modulation différentielle π/4-Déplacement par Modulation de Phase en Quadrature Différentielle (MDPQD) décalée, **caractérisé par** les étapes suivantes consistant à :

- calculer une valeur des phases différentielles par

$$\varphi_Q \quad = \quad \text{arg}(X'p((n+1)T')X'p^*(nT')),$$

où x'p(nT') et X'p((n+1)T') sont les symboles du côté réception de la p[ième] porteuse dans les périodes de symbole nT' et (n+1)T' et X'p*(nT') est la complexe conjuguée de X'p(nT') de toutes les porteuses ; et
- retirer de chaque $\phi_p$ une quantité égale à un entier impair de $\pi/4$.

6. Appareil destiné à estimer une erreur ($1/\Delta T_0$) entre les fréquences d'échantillonnage d'un émetteur et d'un récepteur et estimer un écart de fréquence résiduelle ($\Delta f$) produit du côté réception, dans un système numérique à porteuse multiple du type OFDM, ayant une ou plusieurs porteuses pilotes avec une période de répétition égale à un multiple m de la période de symbole, m étant un nombre entier,
**caractérisé par**
un moyen (5) destiné à retarder lesdits symboles X'$_{pi}$(nT') desdites porteuses pilotes de m périodes de symbole,
un moyen (6) destiné à effectuer l'opération de complexe conjugué sur lesdits symboles retardés X'$_{pi}$(n+m)T',
un moyen (6') destiné à multiplier les symboles non retardés et les complexes conjugués des symboles retardés,
un moyen (7) destiné à obtenir les phases différentielles $\varphi_{pi}$ = arg(X'$_{pi}$((n+m)T')X'$_{pi}$*(nT')), et
un moyen (8) destiné à déterminer des valeurs qui minimisent la quantité $S$.

$$S = \sum_{t=0}^{N_p-1}\left[\phi_{pi} - \frac{1}{L}\left(\frac{\Delta\hat{T}_0}{T_0}p_i - \frac{\Delta\hat{f}}{F}\right)\right]^2$$

où $N_p$ est le nombre des porteuses pilotes et L = Np/(2$\pi$m($N_p$+v)), $p_i$ est l'indice de porteuse pilote, $T_o$ est le quantum temporel du canal, F est l'espacement entre voies secondaires et v est la durée de l'intervalle de garde,
dans lequel des valeurs estimées de l'erreur ($\cdot 1/\Delta T_0$) entre les fréquences d'échantillonnage et les valeurs estimées de l'écart de fréquence résiduelle ($\Delta f$) correspondent aux valeurs déterminées minimisant la quantité $S$.

7. Appareil selon la revendication 6, comprenant en outre un moyen (4) destiné à extraire les symboles X$_{pi}$(nT') des porteuses pilotes $p_i$.

8. Appareil selon la revendication 6 ou 7, comprenant en outre un moyen (7') destiné à retirer de chaque $\varphi_p$ une quantité égale à $n\pi/4$, où n est un entier impair de sorte que $n\pi/4 < |\varphi_p| < (n+2)\,\pi/4n$, et un moyen (8) destiné à l'estimation simultanée des valeurs $\Delta\hat{f}$ et $l/\Delta\hat{T}_0$ qui minimisent la quantité $S$

$$S = \sum_{p=0}^{N_p-1}\left[\phi_p - \frac{1}{L}\left(\frac{\Delta\hat{T}_0}{T_0}p - \frac{\Delta\hat{f}}{F}\right)\right]^2$$

où N est le nombre des porteuses et L = N/2$\pi$ (N+v).

9. Appareil selon la revendication 6, dans lequel le système OFDM est un système de radiodiffusion numérique (DAB).

← —————————— FRAME —————————— →

0 1 2 3 ........... < symbols > ................................ 65 66 67

k=0    ◆ ◆ ◆ ◆ ◆ ◆ ◆ ◆ ◆ ◆ ◆ ◆ ◆    ...............    ◆ ◆ ◆
k=1    © © © © © © © © © © © © © ©    .............    © © ©
k=2    © © © © © © © © © © © © © ©    ..:............    © © ©
k=3    © ◆ © © © ◆ © © © ◆ © © © ◆ ©    ...............    ◆ © ©
k=4    © © © © © © © © © © © © © ©    ...............    © © ©
k=5    © © © © © © © © © © © © © ©    ...............    © © ©
k=6    © © ◆ © © © ◆ © © © ◆ © © © ◆    ..............    © ◆ ©
k=7    © © © © © © © © © © © © © © ©    ...............    © © ©
k=8    © © © © © © © © © © © © © ©    ...............    © © ©
k=9    © © © ◆ © © © ◆ © © © ◆ © © ©    ...............    © © ◆
k=10   © © © © © © © © © © © © © ©    ...............    © © ©
k=11   © © © © © © © © © © © © © ©    ...............    © © ©
k=12   ◆ © © © ◆ © © © ◆ © © © ◆ © ©    ...............    © © ©

...................................................................

       © © © © © © © © © © © © © ©    ...............    © © ©
k_max  ◆ ◆ ◆ ◆ ◆ ◆ ◆ ◆ ◆ ◆ ◆ ◆ ◆ ◆    ...............    ◆ ◆ ◆

$k_{max}$ = 1704 o 6815        ◆ = SPC cells        © = data cells

**Fig. 1**

$$p\frac{\Delta To}{To} - \frac{\Delta f}{F} = L\,\phi_p$$

$p_i, \phi_{pi}$

$tg\alpha = \frac{\Delta To}{LTo}$

$p$

$\phi_p$

$p_1, \phi_{p1}$

$p_2, \phi_{p2}$

$-\frac{\Delta f}{LF}$

**Fig. 2**

**Fig. 3**

**Fig. 4**

**Fig. 5**

**Fig. 6**

# EP 0 998 086 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **K. TAURA ; M. TSUJISHITA et al.** A Digital Audio Broadcasting (DAB) Receiver. *IEEE Transactions on Consumer Electronics,* August 1996, vol. 42 (3), 322-327

- **P.H. MOOSE.** A technique for Orthogonal Frequency Division Multiplexing frequency offset correction. *IEEE Transactions on Communications,* October 1994, vol. 42 (10), 2908-2914
- **H. NOGAMI ; T. NAGASHIMA.** A frequency and timing acquisition technique for OFDM systems. *Proceedings PMRC '95,* vol. 3, 1010-1015